# EUROPEAN PATENT SPECIFICATION

(11) **EP 3 604 245 B1**
(45) Date of publication and mention of the grant of the patent: **26.07.2023**
(21) Application number: 18777909.5
(22) Date of filing: 09.02.2018
(51) Int. Cl.: C03C 27/06, E06B 3/663, E06B 3/677, E06B 3/66

(54) **METHOD FOR MANUFACTURING GLASS PANEL UNIT AND METHOD FOR MANUFACTURING GLASS WINDOW**
VERFAHREN ZUR HERSTELLUNG EINER GLASSCHEIBENEINHEIT UND VERFAHREN ZUR HERSTELLUNG EINES GLASFENSTERS
PROCÉDÉ DE FABRICATION D'UNITÉ DE PANNEAU EN VERRE ET PROCÉDÉ DE FABRICATION DE FENÊTRE EN VERRE

(30) Priority: 31.03.2017 JP 2017072697
(43) Date of publication of application: 05.02.2020
(73) Proprietor: Panasonic Intellectual Property Management Co., Ltd., Osaka-shi, Osaka 540-6207 (JP)
(72) Inventor: ISHIBASHI, Tasuku, Osaka-shi, Osaka 540-6207 (JP); URIU, Eiichi, Osaka-shi, Osaka 540-6207 (JP); HASEGAWA, Kazuya, Osaka-shi, Osaka 540-6207 (JP); NONAKA, Masataka, Osaka-shi, Osaka 540-6207 (JP); ABE, Hiroyuki, Osaka-shi, Osaka 540-6207 (JP); SHIMIZU, Takeshi, Osaka-shi, Osaka 540-6207 (JP); ISHIKAWA, Haruhiko, Osaka-shi, Osaka 540-6207 (JP)
(74) Representative: Müller-Boré & Partner Patentanwälte PartG mbB
(86) International application number: PCT/JP2018/004627
(87) International publication number: WO 2018/179908

(56) References cited:
- EP-A1- 1 642 872
- WO-A1-2014/109368
- WO-A1-2014/109369
- JP-A- 2000 086 305
- JP-A- 2003 321 255
- JP-A- 2004 352 567
- US-A1- 2005 138 892
- US-A1- 2006 065 350

## Description

### Technical Field

The present disclosure relates to a method for manufacturing a glass panel unit and a method for manufacturing a glass window.

### Background Art

A glass panel unit including a pair of glass panes between which an internal space in an evacuated state is formed has been known. In the internal space in the evacuated state, a plurality of pillars (spacers) are arranged in order to maintain a distance between the pair of glass panes.

For example, Patent Literature 1 describes that in in such a glass panel unit, a low-emissivity film may be provided on an inner surface of one of the pair of glass panes.

When a glass pane having a low-emissivity film is stacked on a glass pane of various types to manufacture a glass panel unit, a manufacturing process (a manufacturing device) may have to be changed in accordance with the type of glass panes.

For example, when a glass panel unit having a low-emissivity film is stacked on a sheet of wired glass to manufacture a glass panel unit, the following problems may occur. That is, when a plurality of pillars are arranged on the sheet of wired glass, the pillars may overlap a mesh of wires, which may be obstructive to image processing performed to check arrangement of the pillars.

To avoid this problem, an arrangement pattern of the pillars has to be changed in accordance with the type of wired glass in order to arrange the pillars not to overlap the mesh, and thus, it becomes difficult to make manufacturing processes (manufacturing devices) common.

EP 1 642 872 A1 describes a heat insulating and shielding glass panel comprised of a pair of glass plates hermetically joined together at their outer peripheral edges via a sealing frame that fluidizes at low temperature, such that respective one surfaces of the glass plates face each other and a hollow layer is formed between the glass plates; and pillars that are substantially cylindrical spacers that are inserted into the hollow layer as atmospheric pressure supporting members and determine the gap between the glass plates. A low-emission transparent multilayer having an emittance of not more than 0.1 is coated by sputtering on each of surfaces of the respective glass plates facing the hollow layer so as to realize high heat insulation performance. The low-emission transparent multilayer is comprised of ZnO layers and as dielectric layers separated from each other in the direction of film thickness by an SiNx layer as an amorphous layer, and an Ag-Pd layer as a metal layer containing Ag and Pd.

US 2005/138892 A1 describes a light-transmitting glass panel comprising of a pair of glass plates that are hermetically joined together with one surface of each thereof facing one another, the joining being via a sealing frame that is provided at an outer peripheral portion of the glass plates and fluidizes at low temperature, and the glass plates having a hollow layer formed therebetween, and pillars that are substantially cylindrical spacers that are inserted into the hollow layer as atmospheric pressure supporting members and determine the gap between the glass plates. The pillars are arranged in the hollow layer in a matrix shape with a predetermined spacing, and taking the surface residual compressive stress of the glass plates in MPa to be S, and the thickness of the glass plates in mm to be d, the average spacing D in mm of the pillars arranged in the hollow layer satisfies the relationship D being smaller or equal to 5.2d+5.5+(0.8d+0.08)*sqrt(S).

### Citation List

### Patent Literature

Patent Literature 1: JP 2002-255594 A

### Summary of Invention

The invention is defined by the independent claims, while preferred embodiments form the subject of the dependent claims.

It is an object of present disclosure to: manufacture a glass panel unit having a stack structure including a glass pane of various types and a glass panel unit having a low-emissivity film in common steps; and manufacture a glass window including the glass panel unit.

A method for manufacturing a glass panel unit according to one aspect of the present disclosure includes an arrangement step, a bonding step, an evacuation step, and a sealing step. as from claim 1.
The arrangement step is a step of arranging a plurality of pillars on a first substrate. The bonding step is a step of hermetically bonding the first substrate to a second substrate with a seal member sandwiched between the first substrate and the second substrate to form an internal space surrounded by the seal member between the first substrate and the second substrate. The second substrate faces the first substrate. The seal member has a frame shape surrounding the plurality of pillars. The evacuation step is a step of evacuating the internal space. The sealing step is a step of sealing up the internal space in an evacuated state. The first substrate includes a first glass pane and a low-emissivity film located on the first glass pane, and the plurality of pillars are arranged on the low-emissivity film in the arrangement step.

A method for manufacturing a glass window according to one aspect of the present disclosure includes a fitting step of fitting the glass panel unit to a window frame. as from claim 4.

### Brief Description of Drawings

FIG. 1A is a sectional view illustrating a first glass pane adopted in a method for manufacturing a glass panel unit of an embodiment, FIG. 1B is a sectional view illustrating a state where a low-emissivity film is located on the first glass pane, and FIG. 1C is a sectional view illustrating a state where a protection layer is located on the low-emissivity layer on the first glass pane;
FIG. 2 is a partially cutaway side view illustrating a device used in an arrangement step in the method;
FIG. 3 is a plan view illustrating a first substrate adopted in a bonding step in the method;
FIG. 4 is a sectional view along line A-A of FIG. 3;
FIG. 5 is a perspective view illustrating the first substrate and a second substrate adopted in the bonding step;
FIG. 6 is a plan view illustrating a glass panel unit manufactured by the method;
FIG. 7 is a sectional view along line B-B of FIG. 6;
FIG. 8 is a sectional view illustrating a glass panel unit of a first variation;
FIG. 9 is a plan view illustrating a glass panel unit of a second variation;
FIG. 10 is a sectional view along line C-C of FIG. 9;
FIG. 11 is a sectional view illustrating another example of the glass panel unit of the second variation; and
FIG. 12 is a plan view illustrating a glass window including the glass panel unit of the embodiment.

### Description of Embodiments

The present embodiment relates to methods for manufacturing glass panel units and methods for manufacturing glass windows. The present embodiment specifically relates to a method for manufacturing a glass panel unit having an evacuated internal space and a method for manufacturing a glass window including the glass panel unit.

With reference to the attached drawings, a glass panel unit 90 and a glass window 9 including the glass panel unit 90 will be sequentially described. Note that the drawings schematically show components, and therefore, the dimensional shape of each component in the drawings is different from its actual dimensional shape.

### Glass Panel Unit

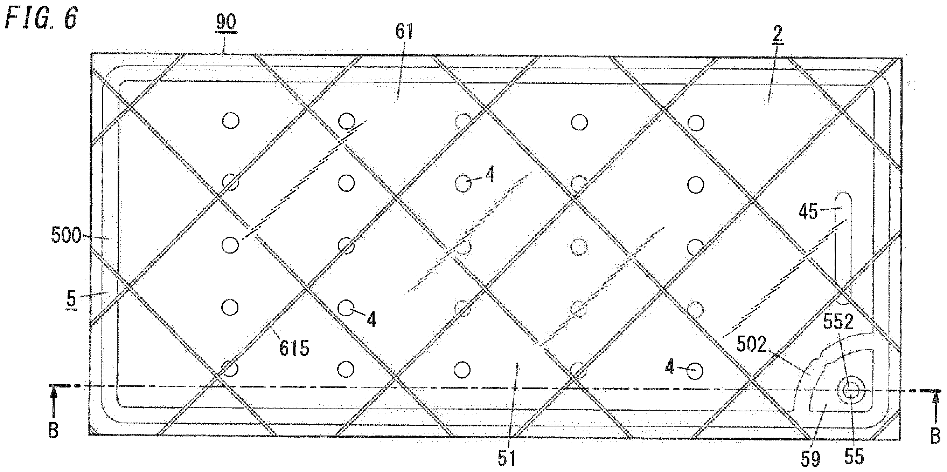

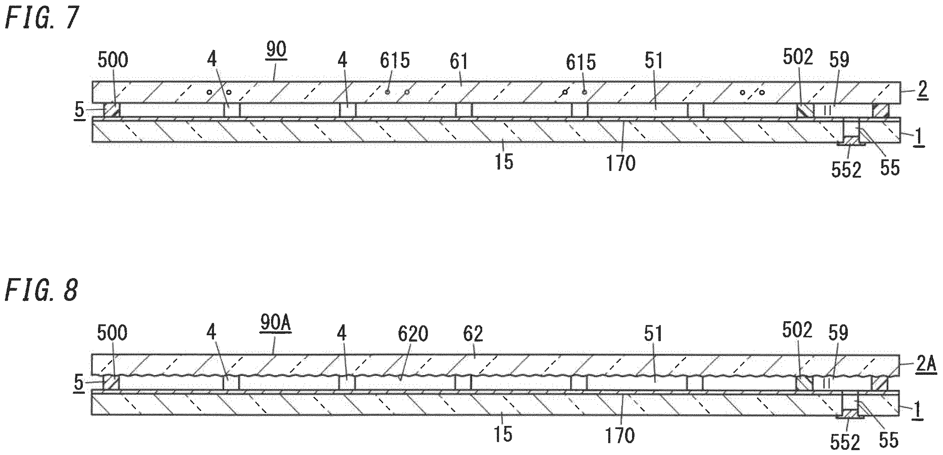

As illustrated in FIGS. 6 and 7, the glass panel unit 90 includes a first substrate 1, a second substrate 2, a seal member 5, a plurality of pillars 4, and a getter 45. The glass panel unit 90 includes a large number of pillars 4.

The first substrate 1 incudes a first glass pane 15 and a low-emissivity layer 170 covering one side in a thickness direction of the first glass pane 15. The low-emissivity layer 170 covers a surface which is a surface of the first glass pane 15 and which faces the second substrate 2. The first substrate 1 has a surface which faces the second substrate 2 and which is a surface of the low-emissivity layer 170.

The second substrate 2 is formed of wired glass 61. The wired glass 61 is a glass pane embedded with a mesh 615 of wires. The mesh 615 reduces breakage of the wired glass 61 when the wired glass 61 is exposed to flame of fire, and therefore, the fire safety of the wired glass 61 is increased.

The second substrate 2 is formed of at least the wired glass 61, and an appropriate coating may be applied to one or both sides in a thickness direction of the wired glass 61.

The seal member 5 includes a frame member 500 and a partition 502 which has an arc shape. The frame member 500 is made of a thermal adhesive such as a glass frit. The partition 502 which has an arc shape is also made of a thermal adhesive such as a glass frit. The material for the frame member 500 and the material for the partition 502 preferably have mutually different melting temperatures.

The frame member 500 is bonded to respective peripheral portions of the first and second substrate 1 and 2. The peripheral portion of the first substrate 1 is hermetically bonded to the peripheral portion of the second substrate 2 with the frame member 500.

The partition 502 separates a space surrounded by the frame member 500 into a space 59 and an internal space 51 other than the space 59. The space 59 communicates with an evacuation port 55 formed in the first substrate 1. In the evacuation port 55, a cap 552 is externally fit. The plurality of pillar 4 and the getter 45 are located in the internal space 51. The internal space 51 may be a thermally insulated space, of which the pressure has been reduced to a degree of vacuum of, for example, 0.1 Pa or lower.

The plurality of pillars 4 are dispersed so as to be spaced apart from each other. The material, dimensions, shape, arrangement pattern, and other parameters of the plurality of pillars 4 may be determined appropriately.

Each pillar 4 is pressed against the surface of the first substrate 1 facing the second substrate 2 and is pressed against a surface which is a surface of the second substrate 2 and which faces the first substrate 1. Thus, the distance between the first substrate 1 and the second substrate 2 is kept at a prescribed distance by each pillar 4. The surface of the second substrate 2 facing the first substrate 1 is a surface of the wired glass 61.

The getter 45 is configured to adsorb molecules of a gas and is spaced from each of the plurality of pillars 4. The getter 45 is disposed on the first substrate 1 but may be disposed on the second substrate 2.

Next, respective steps for manufacturing the glass panel unit 90 will be described.

The method for manufacturing the glass panel unit 90 includes an arrangement step, an inspection step, a bonding step, an evacuation step, and a sealing step.

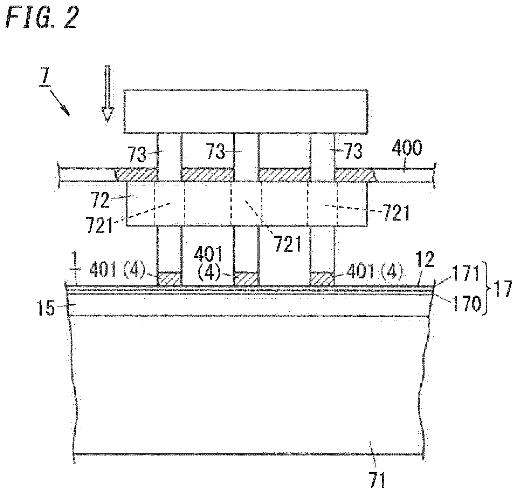

In the arrangement step, the plurality of pillars 4 are arranged on the first substrate 1 with a device 7 for punching shown in FIG. 2.

The first substrate 1 used in this step has a protection layer 171.

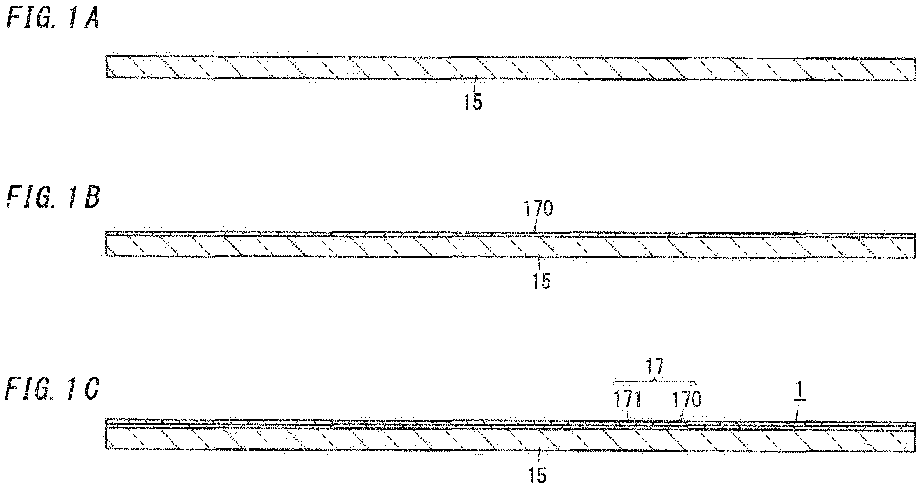

That is, in the first substrate 1, as illustrated in FIGS. 1A, 1B, 1C, and the like, the low-emissivity layer 170 is provided on the surface of the first glass pane 15, the protection layer 171 is further provided on the surface of the low-emissivity layer 170, and the low-emissivity layer 170 and the protection layer 171 form a low-emissivity film 17. The protection layer 171 is made of, for example, carbon.

As illustrated in FIG. 2, the device 7 includes: a substrate support 71 having a stage-like shape; a punching die 72 installed above the substrate support 71; a sheet 400 supplied above the punching die 72; and a plurality of punches 73 installed above the sheet 400.

The substrate support 71 supports the first substrate 1 in such a position that the low-emissivity film 17 is located at an upper end of the first substrate 1.

The punching die 72 is located above the first substrate 1 supported by the substrate support 71. The punching die 72 has a plurality of through holes 721 penetrating in the up-down direction. The sheet 400 is mounted on an upper surface of the punching die 72 to cover the plurality of through holes 721. Examples of a material for the sheet 400 include various types of materials such as a resin and metal.

Each punch 73 has a columnar shape, and specifically, a cylindrical shape. Each punch 73 is configured to downwardly punch, with its tip surface, a portion 401 of the sheet 400 mounted on the punching die 72. Under the tip surface of each punch 73, the one portion 401 of the sheet 400 and the through hole 721 in the punching die 72 are located. Each punch 73 has a dimensional shape which allows penetration through the through hole 721.

In the arrangement step, each punch 73 is driven downward along a linear track. Thus, each punch 73 downwardly punches the one portion 401 of the sheet 400 through the through hole 721 in the punching die 72. In a state where the one portion 401 punched is in contact with the tip surface of the punch 73 and is pressed against a surface of the low-emissivity film 17 of the first substrate 1, that is, a surface of the protection layer 171, the one portion 401 forms the pillar 4. The device 7 is configured to simultaneously drive the plurality of punches 73 into the sheet 400, but the configuration of the device 7 is not limited to this example. The device 7 is configured to drive at least one punch 73 into the sheet 400.

The low-emissivity layer 170 of the low-emissivity film 17 is covered with the protection layer 171. Therefore, even when the portions 401 of the pillars 4 are powerfully pressed against the low-emissivity film 17, damage to the low-emissivity layer 170 is reduced.

Note that a means for arranging the pillars 4 on the first substrate 1 is not limited to a device, such as the device 7, that executes punching from the sheet 400 and arrangement sequentially, but other devices and other means may be used. There may be a case where the low-emissivity film 17 does not include the protection layer 171. In this case, the low-emissivity layer 170 forms the low-emissivity film 17.

According to the invention, in the inspection step, each pillar 4 is inspected to ensure that it is appropriately arranged on the first substrate 1. Specifically, an image of the first substrate 1 is captured with a camera, and image processing is accordingly performed on the image captured, thereby performing the inspection.

After the inspection step, the bonding step is performed.

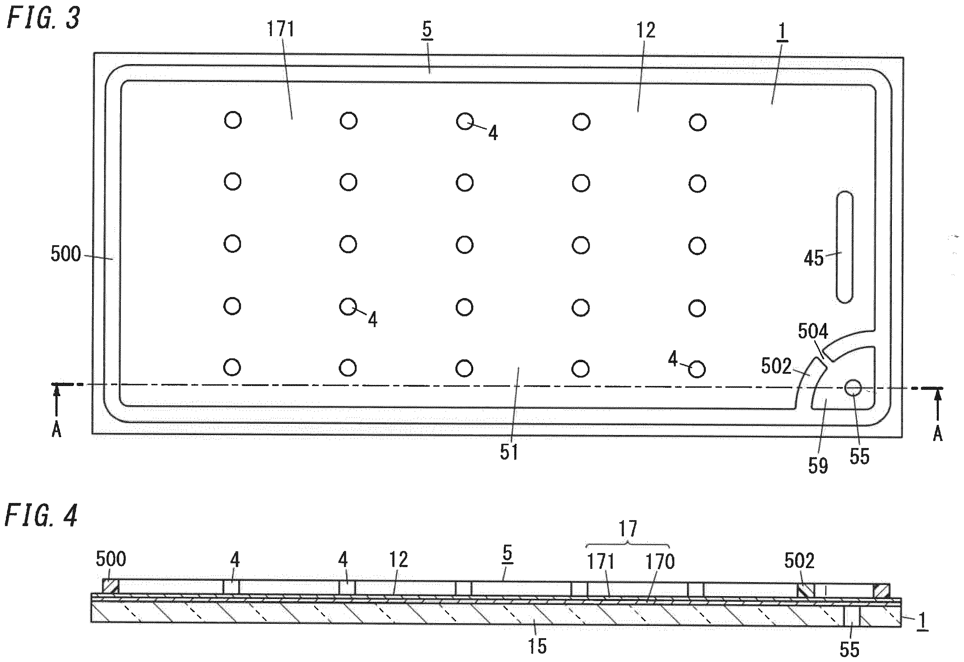

At the start of the bonding step, the seal member 5 and the getter 45 are further disposed on the surface of the low-emissivity film 17 of the first substrate 1 as illustrated in FIGS. 3, 4, and 5.

The frame member 500 and the partition 502 which are included in the seal member 5 are applied to the surface of the low-emissivity film 17 of the first substrate 1 with an applicator such as a dispenser and are then dried and pre-sintered. In the bonding step, the partition 502 has an air passage 504.

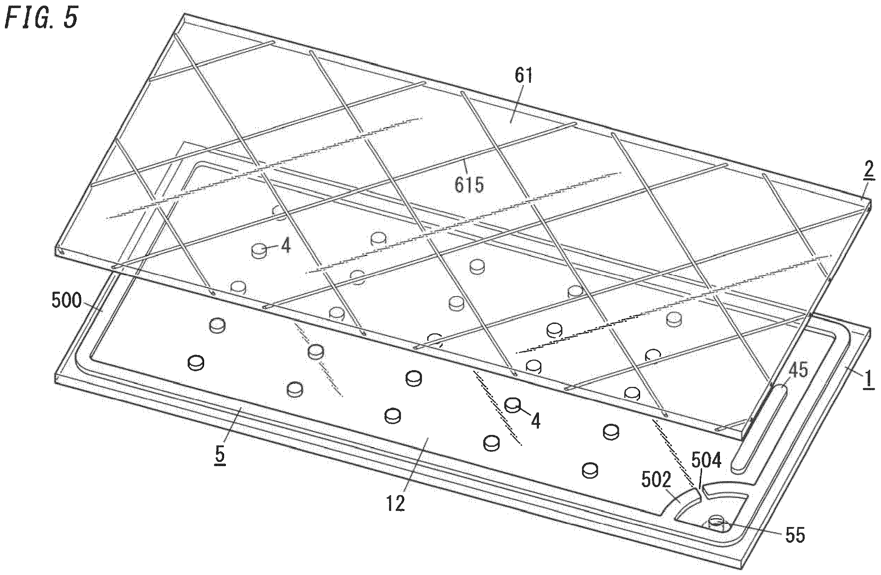

In the bonding step, the first substrate 1 and the second substrate 2, that is, the wired glass 61 are set in a state where the seal member 5, the plurality of pillars 4, and the getter 45 are sandwiched between the first substrate 1 and the second substrate 2 as shown in FIG. 5 and the like, and the first substrate 1 and the second substrate 2 in this state are heated in a bonding furnace.

The peripheral portion of the first substrate 1 is hermetically bonded to the peripheral portion of the second substrate 2 with the frame member 500 melted by being heated. Here, the internal space 51 and the space 59 are in communication with each other via the air passage 504.

The protection layer 171 covering the low-emissivity layer 170 in the arrangement step is gasified in the internal space 51 due to the heating in the bonding furnace in the bonding step. Note that the protection layer 171 may be gasified by being heated at a timing other than heating in the bonding furnace, that is, at an appropriate timing between the arrangement step and the evacuation step.

In the evacuation step, for example, an evacuation pipe is connected to the first substrate 1 such that the evacuation pipe communicates with the evacuation port 55, and the internal space 51 is evacuated through the evacuation pipe, for example, to a degree of vacuum of 0.1 Pa or lower. In other words, in the evacuation step, the internal space 51 is vacuumed. At this time, gasified components of the protection layer 171 are released, together with other air components, from the internal space 51.

The sealing step includes heating the partition 502 to melt the partition 502 at a predetermined temperature, thus deforming the partition 502 to close the air passage 504. Thus, the internal space 51 is sealed up with an evacuated state, specifically, a vacuum state in the internal space 51 being maintained.

The melting temperature of the partition 502 is preferably set to be higher than the melting temperature of the frame member 500. In this way, it is more securely prevented that the partition 502 deforms and closes the air passage 504 in the bonding step.

In the glass panel unit 90 described above, the first substrate 1 including the low-emissivity layer 170 restricts passage of heat caused by insolation, and the second substrate 2 including the wired glass 61 increases the fire safety. Additionally, in the manufacturing process, the plurality of pillars 4 are not arranged on the second substrate 2, that is, the wired glass 61, but the plurality of pillars 4 are arranged on the first substrate 1, and therefore, in the inspection step, each pillar 4 does not overlap the mesh 615, and the occurrence of failure in the inspection is reduced.

In the glass panel unit 90 one evacuation port 55 is formed in the first substrate 1, but as long as the internal space 51 can be sealed up in an evacuated state, a plurality of evacuation ports 55 may be formed in the first substrate 1, or one or a plurality of evacuation ports 55 may be formed in the second substrate 2.

Furthermore, in the glass panel unit 90 the partition 502 is deformed to seal up the internal space 51, but this is only an example and should not be construed as limiting. Alternatively, the internal space 51 may also be sealed up in any other manner. For example, while the internal space 51 is maintained in an evacuated state, the thermal adhesive such as the glass frit inserted in the evacuation port 55 may be melted by being heated to close the evacuation port 55, thereby sealing up the internal space 51.

Subsequently, variations of the glass panel unit 90 will be described. In the following description, components similar to those already described are denoted by the same reference signs in the drawings, the description thereof will be omitted, and configurations different from those already described will be described in detail.

### First Variation (not according with the invention)

A glass panel unit 90A of a first variation will be described with reference to FIG. 8.

In the first variation, a second substrate 2A is formed of ground glass 62 having a rough surface 620. An opposite surface of the ground glass 62 from the rough surface 620 may further accordingly provided with a coating.

The rough surface 620 is a surface on which a large number of fine recesses and protrusions are formed by surface processing. The ground glass 62 has the rough surface 620, and therefore, the ground glass 62 is semi-transparent or non-transparent. The rough surface 620 faces an internal space 51, and therefore, it is prevented that water adheres to the rough surface 620 and makes the ground glass 62 see-through.

In the glass panel unit 90A of the first variation, a first substrate 1 including a low-emissivity layer 170 restricts passage of heat caused by insolation, and the second substrate 2A including the ground glass 62 reduces general transparency. Additionally, in the arrangement step, the plurality of pillars 4 are arranged not on the second substrate 2A, that is, not on the ground glass 62 having the rough surface 620, but on the first substrate 1, and therefore, each pillar 4 is stably arranged without using a special arrangement means for rough surfaces.

### Second Variation

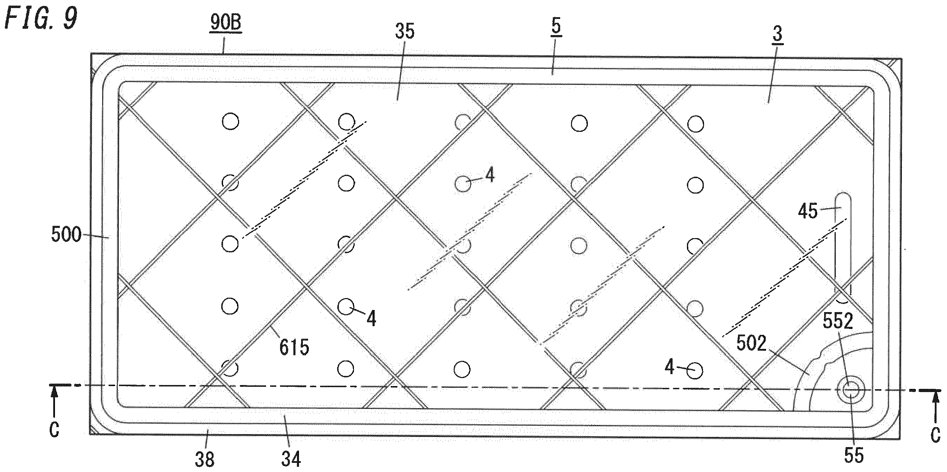

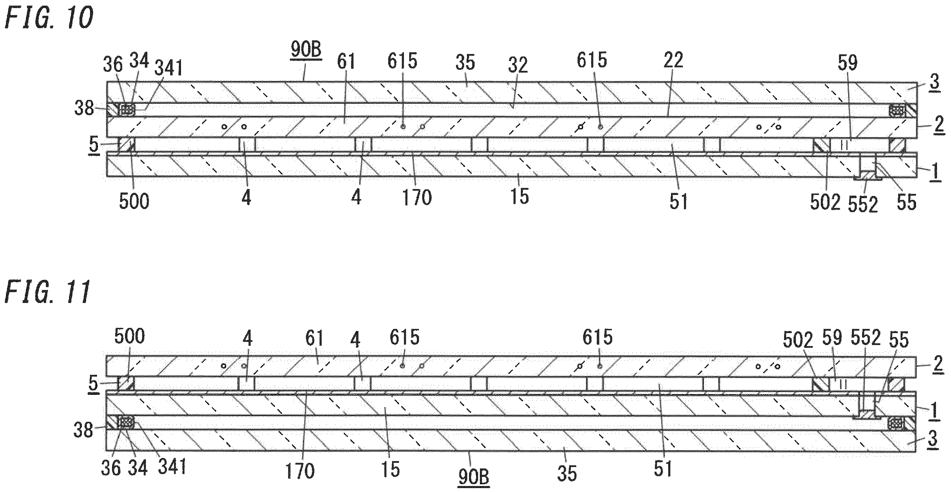

A glass panel unit 90B of a second variation will be described with reference to FIGS. 9 and 10.

The glass panel unit 90B of the second variation further includes a third substrate 3 and a second seal member 38. The third substrate 3 faces a second substrate 2. The second seal member 38 hermetically bonds entire peripheral portions of the second substrate 2 and the third substrate 3 together.

The third substrate 3 includes at least a third glass pane 35. The third substrate 3 is transparent generally but may be semi-transparent or non-transparent.

Between counter surfaces 22 and 32 respectively of the second substrate 2 and the third substrate 3, a second internal space sealed up with the second seal member 38 is formed.

As illustrated in FIG. 10, a spacer 34 having a frame shape is further disposed in an area surrounded by the second seal member 38 having a frame shape. The spacer 34 having a frame shape has a hollow portion in at least part in a circumferential direction of the spacer 34. The hollow portion of the spacer 34 is filled with a desiccant 36.

The spacer 34 is made of metal such as aluminum and has a through hole 341. The through hole 341 is open to an inner peripheral surface of the spacer 34. The hollow portion of the spacer 34 communicates with a second internal space via the through hole 341.

The desiccant 36 may be a silica gel, for example. The second seal member 38 may be made of a highly airtight resin such as a silicone resin or butyl rubber.

The second internal space is a space sealed up with the second substrate 2, the third substrate 3, and the second seal member 38. The second internal space is filled with a dry gas. The dry gas is, for example, dry air, or a dry rare gas such as argon gas. The glass panel unit 90B of the second variation exhibits a further high thermal-insulation property.

Note that the location of the third substrate 3 is not limited to a location facing the second substrate 2. It is required only that the third substrate 3 faces the first substrate 1 or the second substrate. As illustrated in FIG. 11, when the third substrate 3 faces the first substrate 1, the second seal member 38 bonds peripheral portions of the first substrate 1 and the third substrate 3 together.

A method for manufacturing the glass panel unit 90B of the second variation includes a second bonding step in addition to the above-described arrangement step, inspection step, bonding step, evacuation step, and sealing step. The second bonding step is a step of bonding the second substrate 2 to the third substrate 3 with the second seal member 38. Note that when the third substrate 3 faces the first substrate 1, the second bonding step is a step of bonding the first substrate 1 to the third substrate 3 with the second seal member 38.

### Glass Window

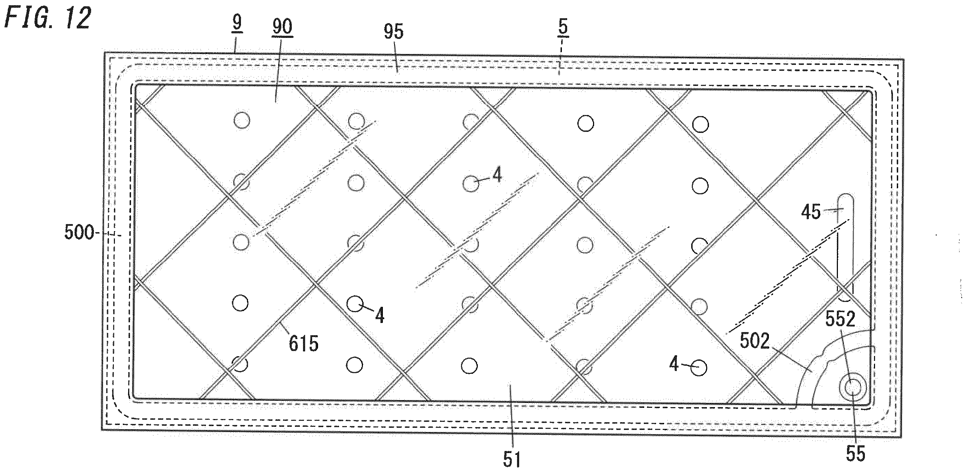

The glass window 9 including the glass panel unit 90 will be described with reference to FIG. 12.

The glass window 9 includes: the glass panel unit 90 and a window frame 95 fitted to a peripheral portion of the glass panel unit 90 and having a rectangular frame shape. In the glass window 9, when viewed from the front side, the frame member 500 of the seal member 5 of the glass panel unit 90 is preferably located to be covered with the window frame 95.

The method for manufacturing the glass window 9 includes a fitting step of fitting the window frame 95 to the glass panel unit 90 in addition to the steps for manufacturing the glass panel unit 90. In the fitting step, the glass panel unit 90A of the first variation may be fit to the window frame 95, or the glass panel unit 90B of the second variation may be fit to the window frame 95.

### Aspects

As can be seen from the above-described embodiment and variations, a method of a first aspect is a method for manufacturing a glass panel unit and includes an arrangement step, a bonding step, an evacuation step, and a sealing step. The arrangement step is a step of arranging a plurality of pillars (4) on a first substrate (1). The bonding step is a step of hermetically bonding the first substrate (1) to a second substrate (2; 2A; 2B) with a seal member (5) sandwiched between the first substrate (1) and the second substrate (2; 2A; 2B). The second substrate (2; 2A; 2B) faces the first substrate (1). The seal member (5) has a frame shape surrounding the plurality of pillars (4). In the bonding step, an internal space (51) surrounded by the seal member (5) is formed between the first substrate (1) and the second substrate (2; 2A; 2B). The evacuation step is a step of evacuating the internal space (51). The sealing step is a step of sealing up the internal space (51) in an evacuated state. The first substrate (1) includes a first glass pane (15) and a low-emissivity film (17) located on the first glass pane (15). The plurality of pillars (4) are arranged on the low-emissivity film (17) in the arrangement step.

Thus, according to the method of the first aspect, it is possible to stack the second substrate (2; 2A; 2B) on the first substrate (1) including the low-emissivity film (17) via the plurality of pillars (4) to form the glass panel unit (90). Here, also when a glass pane of various types such as wired glass is used as the second substrate (2; 2A; 2B), it is possible to manufacture the glass panel unit (90; 90A; 90B) in common steps, that is, the arrangement step, bonding step, evacuation step, and sealing step regardless of the type of the glass pane.

As the second substrate (2A) is formed of wired glass (61), the plurality of pillars (4) are arranged on the first substrate (1) in the arrangement step. Thus, in the subsequent inspection step, a mesh (615) in the wired glass (61) does not overlap the pillars (4) and is not obstructive. Thus, the method of the first aspect enables the glass panel unit (90; 90A; 90B) including the low-emissivity film (17) to be manufactured without a special step according to the type of the glass pane included in the second substrate (2; 2A; 2B).

A method of a second aspect is a method for manufacturing a glass panel unit and can be combined with the method of the first aspect. In the method of the second aspect, the low-emissivity film (17) includes a low-emissivity layer (170) on the first glass pane (15) and a protection layer (171) on the low-emissivity layer (170). The plurality of pillars (4) are arranged on a surface of the protection layer (171) in the arrangement step.

Thus, according to the method of the second aspect, the presence of the protection layer (171) reduces damage to the low-emissivity layer (170) when the plurality of pillars (4) are arranged on the low-emissivity film (17).

A method of a third aspect is a method for manufacturing a glass panel unit and can be combined with the method of the second aspect. In the method of the third aspect, heating performed between the arrangement step and the evacuation step gasifies the protection layer (171).

Thus, the method of the third aspect enables the glass panel unit (90; 90A; 90B) to be manufactured with the protection layer (171) being removed.

A method of a fourth aspect is a method for manufacturing a glass panel unit and can be combined with the method of the third aspect. In the method of the fourth aspect, the bonding step includes a step of heating the seal member (5) to melt the seal member (5). The heating in the bonding step gasifies the protection layer (171).

Thus, according to the method of the fourth aspect, the protection layer (171) is removed in the bonding step.

Thus, according to the method of the first aspect, it is possible to manufacture a glass panel unit (90A) having increased fire safety. Additionally, the plurality of pillars (4) are arranged on the first substrate (1) in the arrangement step, and therefore, when an inspection by image processing is performed before the bonding step, the mesh (615) in the wired glass (61) does not overlap the pillars (4) and is not obstructive.

A method of a fifth aspect is a method for manufacturing a glass panel unit and can be combined with the method of any one of the first to fourth aspects. The manufacturing method of a glass panel unit of a fifth aspect further includes a second bonding step. The second bonding step is a step of hermetically bonding a third substrate (3) including a third glass pane (35) to the first substrate (1) or the second substrate (2; 2A; 2B) with a second seal member (38) having a frame shape.

Thus, according to the method of the fifth aspect, it is possible to manufacture a glass panel unit (90; 90A; 90B) having a further high thermal insulation property.

A method of an sixth aspect is a method for manufacturing a glass window and can be combined with the method of any one of the first to fifth aspects. The method of the sixth aspect includes a fitting step of fitting the glass panel unit (90; 90A; 90B) to a window frame (95).

Thus, according to the method of the sixth eight aspect, it is possible to manufacture a glass window (9) including a low-emissivity film (17) in common steps, that is, the arrangement step, bonding step, evacuation step, sealing step, and fitting step regardless of the type of the glass pane.

### Reference Signs List

- 1: FIRST SUBSTRATE
- 12: SURFACE
- 15: FIRST GLASS PANE
- 17: LOW-EMISSIVITY FILM
- 170: LOW-EMISSIVITY LAYER
- 171: PROTECTION LAYER
- 2, 2A, 2B: SECOND SUBSTRATE
- 3: THIRD SUBSTRATE
- 35: THIRD GLASS PANE
- 38: SECOND SEAL MEMBER
- 4: PILLAR
- 5: SEAL MEMBER
- 51: INTERNAL SPACE
- 55: EVACUATION PORT
- 61: WIRED GLASS
- 62: GROUND GLASS
- 620: ROUGH SURFACE
- 9: GLASS WINDOW
- 90, 90A, 90B: GLASS PANEL UNIT
- 95: WINDOW FRAME

## Claims

1. A method for manufacturing a glass panel unit, the method comprising:
an arrangement step of arranging a plurality of pillars (4) on a first substrate (1);
an inspection step of inspecting to ensure that each of the plurality of pillars (4) is appropriately arranged on the first substrate (1) by capturing an image of the first substrate (1) with a camera and performing image processing on the image captured,
a bonding step of hermetically bonding the first substrate (1) to a second substrate (2) with a seal member (5) sandwiched between the first substrate (1) and the second substrate (2) to form an internal space (51) surrounded by the seal member (5) between the first substrate (1) and the second substrate (2), the second substrate (2) facing the first substrate (1), the seal member (5) having a frame shape surrounding the plurality of pillars (4);
an evacuation step of evacuating the internal space (51); and
a sealing step of sealing up the internal space (51) in an evacuated state,
the second substrate (2) including wired glass,
the first substrate (1) including a first glass pane (15) and a low-emissivity film (17) located on the first glass pane (15),
the first glass pane (15) not being wired glass,
the plurality of pillars (4) being arranged on the low-emissivity film (17) in the arrangement step.

2. The method of claim 1, wherein
the low-emissivity film (17) includes
a low-emissivity layer (170) on the first glass pane (17), and
a protection layer (171) on the low-emissivity layer (170), and
the plurality of pillars (4) are arranged on a surface of the protection layer (171) in the arrangement step.

3. The method of any one of claims 1 to 2, further comprising a second bonding step of hermetically bonding a third substrate (3) including a third glass pane (35) to the first substrate (1) or the second substrate (2) with a second seal member (38) having a frame shape.

4. A method for manufacturing a glass window, the method comprising a fitting step of fitting the glass panel unit (90) manufactured by the method of any one of claim 1 to 3 to a window frame (95).

## Patentansprüche

1. Verfahren zur Herstellung einer Glasplatteneinheit, wobei das Verfahren umfasst:
einen Anordnungsschritt des Anordnens einer Vielzahl von Säulen (4) auf einem ersten Substrat (1);
einen Prüfschritt des Prüfens, um sicherzustellen, dass jede der Vielzahl von Säulen (4) zweckmäßig auf dem ersten Substrat (1) angeordnet ist, indem ein Bild des ersten Substrats (1) mit einer Kamera aufgenommen wird und eine Bildverarbeitung des aufgenommenen Bilds durchgeführt wird,
einen Verbindungsschritt des hermetischen Verbindens des ersten Substrats (1) mit einem zweiten Substrat (2) mittels eines Dichtungselements (5), das zwischen dem ersten Substrat (1) und dem zweiten Substrat (2) sandwichartig angeordnet ist, um einen von dem Dichtungselement (5) umgebenen Innenraum (51) zwischen dem ersten Substrat (1) und dem zweiten Substrat (2) zu bilden, wobei das zweite Substrat (2) dem ersten Substrat (1) zugewandt ist, wobei das Dichtungselement (5) eine die Vielzahl von Säulen (4) umgebende Rahmenform aufweist;
einen Evakuierungsschritt des Evakuierens des Innenraums (51); und
einen Abdichtungsschritt des Abdichtens des Innenraums (51) in einem evakuierten Zustand,
wobei das zweite Substrat (2) ein Drahtglas aufweist,
wobei das erste Substrat (1) eine erste Glasscheibe (15) und einen Film mit niedrigem Emissionsvermögen (17) auf der ersten Glasscheibe (15) aufweist,
wobei die erste Glasscheibe (15) kein Drahtglas ist,
wobei die Vielzahl von Säulen (4) in dem Anordnungsschritt auf dem Film mit niedrigem Emissionsvermögen (17) angeordnet werden.

2. Verfahren nach Anspruch 1, wobei
der Film mit niedrigem Emissionsvermögen (17) aufweist
eine Schutzschicht (170) mit niedrigem Emissionsvermögen auf der ersten Glasscheibe (17), und
eine Schutzschicht (171) auf der Schicht mit niedrigem Emissionsvermögen (170), und
die Vielzahl von Säulen (4) in dem Anordnungsschritt auf einer Oberfläche der Schutzschicht (171) angeordnet werden.

3. Verfahren nach einem der Ansprüche 1 bis 2, ferner umfassend einen zweiten Verbindungsschritt des hermetischen Verbindens eines dritten Substrats (3), das eine dritte Glasscheibe (35) aufweist, mit dem ersten Substrat (1) oder dem zweiten Substrat (2) mittels eines zweiten Dichtungselements (38), das eine Rahmenform aufweist.

4. Verfahren zur Herstellung eines Glasfensters, wobei das Verfahren einen Einpassungsschritt des Einpassens der durch das Verfahren nach einem der Ansprüche 1 bis 3 hergestellten Glasplatteneinheit (90) in einen Fensterrahmen (95) umfasst.

## Revendications

1. Procédé de fabrication d'unité de panneau en verre, le procédé comprenant :
une étape d'agencement d'agencement d'une pluralité de piliers (4) sur un premier substrat (1) ;
une étape d'inspection d'inspection pour assurer que chacun de la pluralité de piliers (4) est agencé de manière appropriée sur le premier substrat (1) en capturant une image du premier substrat (1) avec une caméra et en réalisant un traitement d'image sur l'image capturée,
une étape de liaison de liaison hermétique du premier substrat (1) à un deuxième substrat (2) avec un élément de joint (5) pris en sandwich entre le premier substrat (1) et le deuxième substrat (2) pour former un espace interne (51) entouré par l'élément de joint (5) entre le premier substrat (1) et le deuxième substrat (2), le deuxième substrat (2) faisant face au premier substrat (1), l'élément de joint (5) présentant une forme de cadre entourant la pluralité de piliers (4) ;
une étape de mise sous vide de mise sous vide de l'espace interne (51) ; et
une étape d'étanchéité d'étanchéification de l'espace interne (51) dans un état mis sous vide,
le deuxième substrat (2) comportant un verre armé,
le premier substrat (1) comportant un premier carreau de verre (15) et un film à faible émissivité (17) situé sur le premier carreau de verre (15),
le premier carreau de verre (15) n'étant pas un verre armé,
la pluralité de piliers (4) étant agencé sur le film à faible émissivité (17) lors de l'étape d'agencement.

2. Procédé selon la revendication 1, dans lequel
le film à faible émissivité (17) comporte
une couche à faible émissivité (170) sur le premier carreau de verre (17), et
une couche de protection (171) sur la couche à faible émissivité (170), et
la pluralité de piliers (4) sont disposés sur une surface de la couche de protection (171) dans l'étape d'agencement.

3. Procédé selon l'une quelconque des revendications 1 à 2, comprenant en outre une deuxième étape de liaison de liaison hermétique d'un troisième substrat (3) comportant un troisième carreau de verre (35) au premier substrat (1) ou au deuxième substrat (2) avec un deuxième élément de joint (38) présentant une forme de cadre.

4. Procédé de fabrication d'une fenêtre en verre, le procédé comprenant une étape d'ajustement d'ajustement de l'unité de panneau en verre (90) fabriquée par le procédé selon l'une quelconque des revendications 1 à 3 au cadre de fenêtre (95).
